Europäisches Patentamt

European Patent Office

Office européen des brevets

(11) Veröffentlichungsnummer: **0 288 671**
**A2**

## (12) EUROPÄISCHE PATENTANMELDUNG

(21) Anmeldenummer: **88101944.2**

(22) Anmeldetag: **10.02.88**

(51) Int. Cl.4: **G01D 5/12**

(30) Priorität: **28.04.87 DE 3714072**

(43) Veröffentlichungstag der Anmeldung:
**02.11.88 Patentblatt 88/44**

(84) Benannte Vertragsstaaten:
**DE ES FR GB IT**

(71) Anmelder: **GOSSEN GMBH**
**Nägelsbachstrasse 25**
**D-8520 Erlangen(DE)**

(72) Erfinder: **Henneberger, Heinz, Dipl.-Ing,**
**Tilmann-Riemenschneider-Strasse 45**
**D-8552 Höchstadt a.d. Aisch(DE)**

(74) Vertreter: **Hafner, Dieter, Dr.rer.nat.,**
**Dipl.-Phys.**
**Ostendstrasse 132**
**D-8500 Nürnberg 30(DE)**

(54) **Messgerät.**

(57) Ein Meßgerät für die Messung physikalischer, insbesondere elektrischer Größen, die in analoger oder digitaler Form vorliegen, soll in der Weise ausgestaltet werden, daß die bisher bei Meßgeräten erforderliche Vielzahl von Skalen, Meßwerken und Zusatzschaltungen sehr erheblich vermindert, wenn nicht gar völlig entbehrlich gemacht wird, um dadurch die Lagerhaltung von Meßgeräten zu vereinfachen und die Lagerkosten zu reduzieren, während gleichzeitig die Vorteile der analogen Meßwerterfassung und -anzeige mit denen der digitalen Meßwerterfassung bis hin zur alphanumerischen Anzeige in hervorragender Weise kombinierbar sein sollen und der Anwender dieses Meßgerätes in die Lage versetzt werden soll, dieses an seine unterschiedlichsten Meßaufgaben rasch und einfach anpassen zu können.

Ein Meßgerät weist eine programmierbare Anpassungselektronik (2) mit einem Einheitsmeßwerk (1) und/oder eine programmierbare Skala (3) zum Erfassen und Anzeigen einer aus einer Anzahl der verschiedensten Meßgrößen beliebig wählbaren Meßgröße auf, wobei zum Betrieb des Meßgerätes eine elektrische Stromversorgung (6), z. B. aus der Meßgröße selbst oder Solarzellen, vorgesehen ist.

Fig. 1

EP 0 288 671 A2

## Meßgerät

Die Erfindung betrifft ein Meßgerät gemäß dem Oberbegriff des Patentanspruches 1.

Der Stand der Technik:

Zur optischen Kommunikation mit Meßwerten steht ein breites Spektrum zur Verfügung, das von elektromechanischen Meßinstrumenten über Meßgeräte mit Digital-und Linearanzeigen bis zu Meßgeräten mit Bildschirmsystemen reicht.

Bei den zu erwartenden Fortschritten in den optoelektronischen Displaytechniken und deren Ansteuerung wird sich der Trend zu Meßgeräten mit vollelektronischen Anzeigen fortsetzen. Bereits heute sind insbesondere die folgenden Displaytechnologien im Einsatz:

- Kathodenstrahlröhren (CRT)
- Leuchtdioden (LED)
- Fluoreszenz-Anzeigen
- Plasma-Anzeigen
- Flüssigkristall-Anzeigen (LCD)
- Glühfaden-Anzeigen
- Elektrolumineszenz-Anzeigen
- elektrochrome Anzeigen.

Um Meßwerte oder die aus ihnen abgeleiteten Informationen darzustellen, gibt es heute die folgenden Möglichkeiten:

- analoge Meßwertdarstellung
- digitale Meßwertdarstellung
- alphanumerische Meßwertdarstellung
- graphische Meßwertdarstellung
- Meßwertdarstellung mittels Lampenanzeigern.

Die analoge und die digitale Meßwertdarstellung haben unterschiedliche Vorteile. Analoge Anzeigen zeichnen sich dadurch aus, daß man Tendenzen nach Richtung und Größe gut erkennen und leichter mehrere Meßgrößen gleichzeitig überwachen kann. Hierbei werden vorwiegend Drehspul-und Dreheiseninstrumente verwendet.

Die Vorteile der digitalen Anzeigen liegen vor allem in der höheren Genauigkeit sowie der guten Ablesbarkeit einzelner Meßwerte. Außerdem haben sie einen hohen Eingangswiderstand, automatische Nullpunktkorrektor, Meß wertspeicherung und Datenausgang. Schon ab Genauigkeitsanforderungen von 0,5 % stellen sie gegenüber der analogen Darstellungsart die wirtschaftlichere Lösung dar.

Beim Überwachen von Meßwerten tritt das Problem auf, daß bestimmte Aktionen manuell vorgenommen werden sollen, wobei derartige Maßnahmen dem Benutzer alphanumerisch mitgeteilt werden können. Hierzu eignen sich insbesondere die Datenzeilen optoelektronischer Displays, wobei kundenspezifische Texte zum Beispiel in einem EPROM gespeichert sind und durch Grenzwertsignale initiiert werden.

Es ist weiterhin bekannt, analog anzeigende Meßgeräte durch die unterschiedlichsten Meßwerke (Innenwiderstand, Dämpfung, Lagerung), Skalenblätter und Zeiger an die verschiedensten Meßaufgaben anzupassen. Des weiteren gehört der Einsatz von Vor-und Nebenwiderständen zum Zwecke der Meßbereichsanpassung zur üblichen Meßtechnik.

Weiterhin sind digitale Vielfachmesser bekannt, die den Meßwert in digitaler Form erfassen, verarbeiten und darstellen.

Es sind ferner sogenannte mechanische Wechselskalen bekannt, die zusätzlich neben der Meßskala noch mit entsprechenden Kurzzeichen und Sinnbildern - je nach Meßaufgabe - beschriftet sind.

Meßgeräte mit LCD-Anzeigen sind zum Beispiel aus den DE-OSen 29 31 327 und 31 19 215 bekannt.

Im übrigen besteht noch die Möglichkeit, mittels mehr oder weniger aufwendigen Zusatzschaltungen analoge Meßwerke sozusagen "intelligenter" und empfindlicher zu machen, wodurch jedoch für jede Meßaufgabe eine verhältnismäßig teure Sonderentwicklung erforderlich ist.

Darüber hinaus ist es bekannt, daß in den Spulenwiderständen von Meßwerken eine elektrische Leistung, der sogenannte Eigenverbrauch, auftritt. Allgemein gilt hier, daß ein geringer Eigenverbrauch zu Lasten der Genauigkeit, des Preises und der mechanischen Robustheit geht.

Überschlägig gilt hierbei die folgende Formel:

$$\underline{\frac{Preis\ x\ Fehlergrenze}{Empfindlichkeit}} \quad = \quad Konstant$$

Um diesen Ausdruck möglichst optimal zu halten, wird der Innenwiderstand oder die Stromaufnahme von Meßwerken an die jeweilige Meßaufgabe angepaßt, was aber in der Praxis zu sehr vielen Meßwerktypen und damit zwangsläufig zu entsprechend hohen Lagerkosten führt.

Die Vielzahl von Skalenblättern, Meßwerken und Zusatzschaltungen führt schließlich dazu, daß sich der Anwender von Meßgeräten einer enormen Anzahl von Meßgerätevarianten gegenüber sieht, die ihm die Auswahl des richtigen Meßgerätetyps sehr erschwert, wenn nicht gar unmöglich macht.

Im übrigen ist hier zu beachten, daß bei den heutigen Zusammenbautoleranzen von Meßwerken ein mechanischer Skalenwechsel und Spulenaustausch ohne nachfolgendem Justiervorgang nur bei einer Anzeigegenauigkeit > 1,5 % möglich ist.

Der Erfindung liegt nun die Aufgabe zugrunde, ein Meßgerät mit den Merkmalen des Oberbegriffs des Patentanspruches 1 zu schaffen und dieses in der Weise auszugestalten, daß letztendlich die bisher erforderliche Vielzahl von Skalen, Meßwerken und Zusatzschaltungen sehr erheblich vermindert, wenn nicht gar völlig entbehrlich gemacht wird, um dadurch die Lagerhaltung von Meßgeräten zu vereinfachen und die Lagerkosten zu reduzieren, während gleichzeitig die Vorteile der analogen Meßwerterfassung und -anzeige mit denen der digitalen Meßwerterfassung bis hin zur alphanumerischen Anzeige in hervorragender Weise kombinierbar sein sollen und der Anwender dieses Meßgeräts in die Lage versetzt werden soll, dieses an seine unterschiedlichsten Meßaufgaben rasch und einfach anpassen zu können.

Diese Aufgabe wird gemäß der Erfindung durch die Kombination der Merkmale des Kennzeichens des Patentanspruches 1 gelöst.

Vorteilhafte Weiterbildungen dieses erfindungsgemäßen Meßgerätes ergeben sich aus den Unteransprüchen.

Die Ansprüche 2 - 5 beschäftigen sich jeweils mit in Hinblick auf die Erfindungsaufgabe zweckmäßigen und günstigen Ausgestaltungen der Programmiereinheit für die dem Einheitsmeßwerk zugeordnete Anpassungselektronik und/oder für die programmierbare Skala, bei der es sich beispielsweise um eine elektronisch beschriftbare Skala handelt.

Gegenstände der Ansprüche 6 - 8 sind jeweils vorteilhafte Ausgestaltungen der Anspassungelektronik für das Einheitsmeßwerk.

Gemäß Anspruch 9 kann es vorteilhaft sein, wenn die programmierbare Skala wenigstens ein Flüssigkristall-Anzeigelement (LCD) aufweist. In diesem Falle besteht die Möglichkeit, das LCD der Skala mit fest zugeordneten und beschrifteten Skalen und Symbolen auszustatten. Andererseits kann das LCD aber auch aus einer frei programmierbaren Punktmatrix bestehen. Das LCD der programmierbaren Skala ist vorzugsweise beleuchtbar. Im übrigen kann diese Skala aus einer reflexiven LCD, einer transmissiven LCD, oder aber auch aus einer transflexiven LCD bestehen.

Darüber hinaus kann die Skala aber auch in der Weise ausgebildet sein, daß neben den dem Meßumfang entsprechenden Skalenteilen, Schriftzeichen, Sinnbildern, Symbolen auch Balken, Zeigersymbole sowie alphanumerische Zeichen darstellbar sind. Gemäß Anspruch 10 besteht die günstige Möglichkeit, daß die programmierbare Skala aus einem farbigen LCD gebildet ist, wobei die Farbe durch die Amplitude der erfaßten Meßgröße bestimmt ist.

Eine weitere, außerordentlich günstige Ausgestaltungsmöglichkeit für die programmierbare Skala besteht darin, daß diese durch einen Fluoreszenzkollektor gebildet ist, bei dem in einer Kunststoffplatte, z. B. Acrylglasplatte, als Lichtsammler bzw. Lichtkonzentrator ein fluores zierender Farbstoff eingearbeitet ist, der das absorbierte Licht durch Fluoreszenz in konzentrierter Form wieder über durch ein LCD-Display auf der Oberfläche der Kunststoffplatte künstlich erzeugte, veränderbare Störstellen abgibt. Hierbei ist es weiterhin vorteilhaft, wenn an wenigstens einer der Kanten des als Skala dienenden Fluoreszenzkollektors Solarzellen zur Gewinnung von elektrischer Energie angebracht sind, die zur Versorgung des kompletten Meßgerätes verwendet werden kann.

Bei dem programmierbaren Einheitsmeßwerk kann es sich vorzugsweise um ein Meßwerk mit konstantem Innenwiderstand und konstanter Dämpfung handeln, beispielsweise um ein Drehspul-oder Dreheisenmeßwerk.

Bei einem Drehspul-oder Dreheisenmeßwerk ist es allerdings erforderlich, stets gegen die Kraft einer Rückstellfeder zu treiben, weswegen auch bei unveränderter Zeigerstellung, z. B. Zeiger-Mittelstellung, die der Rückstellfeder innewohnende potentielle Energie zugeführt werden muß, was recht energieaufwendig ist.

Mit Rücksicht hierauf wird im Rahmen der vorliegenden Erfindung weiterhin vorgeschlagen, als Einheitsmeßwerk einen digital ansteuerbaren Schrittmotor, beispielweise einen rotatorischen Schrittmotor oder einen Linear-Schrittmotor zu benutzen.

In bevorzugter Weise ist das Einheitsmeßwerk als ein in zwei Drehrichtungen, d. h. vor-und rückwärts laufender rotatorischer Schrittmotor ausgebildet. Hierbei kann als Ansteuerelektronik für diesen Schrittmotor eine vorzugsweise der Anpassungselektronik nachgeschaltete digitale Treiberstufe vorgesehen sein, durch welche der Schrittmotor mit den entsprechenden digitalen Eingangssignalen versorgt wird. Dieser Schrittmotor liefert sodann entsprechende mechanische Ausgangsgrößen, d. h. Drehrichtung, Drehzahl und Drehwinkel, für ein Getriebe zur Betätigung eines Zeigers.

Hierbei kann es ferner außerordentlich günstig sein, wenn die Energieversorgung des Schrittmotors und/oder weiterer Komponenten, wie z. B. Anpassungselektronik, Treiberschaltungen usw., durch die an einer oder mehreren Kanten des Fluorenszenzkollektors angebrachten Solarzellen erfolgt. Die freien Kanten des Fluoreszenzkollektors, d. h. die nicht mit Solarzellen besetzten Kanten, sind hierbei zur Totalreflexion hochreflektiv ausgebildet, vorzugsweise versilbert.

Die Vorteile des als Schrittmotor ausgebildeten Einheitsmeßwerkes bestehen darin, daß der Schrittmotor mit einem extrem niedrigen Energieverbrauch bei einer digitalen Ansteuerung auskommt, da der Schrittmotor nur dann Strom verbraucht, wenn er über das Getriebe eine Zeigerbewegung verursacht, während ansonsten, im Gegensatz beispielsweise zum Drehspulmeßwerk, keine Energiezuführung zum Schrittmotor erforderlich ist. Die Auflösung wird lediglich durch das Getriebe festgelegt, da jeder Eingangsimpuls eine z. B. 180°-Drehung der Schrittmotorenwelle bewirkt.

Die Treiberschaltungen für die elektronisch beschriftbare Skala können beispielsweise in der Form eines Mikroprozessors in der Programmiereinheit integriert sein, wobei dann dieser Mikroprozessor zur Ansteuerung des LCD-Display auf der Oberfläche der Kunststoffplatte des Fuoreszenzkollektors dient, was letztendlich zur digitalen Meßwertanzeige führt.

Darüberhinaus ist es noch möglich, im Bereich der Skala zusätzlich "Talk-Back-IC's" für digitalisierte und wiederholte Sprache einzusetzen.

Im übrigen kann die gesamte Elektronik des erfindungsgemäßen Meßgerätes aus einen ASIC ( = Application Specific Integrated Circuit) bestehen.

Schließlich kann die Stromversorgung für das Meßgerät wahlweise an ein Netzgerät oder eine Batterie oder an Solarzellen anschließbar sein.

Bei dem nach der Erfindung ausgebildeten Meßgerät wird der ganz erhebliche Vorteil erreicht, daß statt einer großen Anzahl von unterschiedlichen, kompletten Meßgeräten für die verschiedensten Meßgrößen, insbesondere elektrische Meßgrößen, nunmehr nur ein einziger Meßgerätetyp mit einem Meßwerk und mit einer Skala hergestellt aud auf Lager gehalten werden muß.

Die jeweils günstigste Programmierung von Einheitsmeßwerk und Skala ist hierbei erst am Ort der Anwendung, d.h. beim Benutzer des Meßgerätes, mit wenigen Handgriffen durch Einsetzen der passenden Bauelemente, wie z. B. Schaltbrücken oder EPROM's erforderlich. Diese Programmierung kann am Anwendungsort sogleich ausprobiert und erforderlichenfalls verändert und/oder angepaßt werden.

Darüber hinaus besitzt das erfindungsgemäße Meßgerät die Vorteile einer besseren Ablesegenauigkeit, einer verbesserten Möglichkeit der Datenweiterverarbeitung, einer leichteren Kalibrierung, einer universellen Einbaulage sowie einer außerordentlich hohen Meßrate.

Im übrigen werden bei dem nach der Erfindung ausgebildeten Meßgerät die Vorteile der analogen Meßwerterfassung, wie insbesondere Übersichtlichkeit, Tendenzerkennbarkeit, geringer Aufwand, mit denen der digitalen Meßwerterfassung, wie insbesondere leichte Ablesbarkeit, hohe Genauigkeit und fehlerfreie Weiterverarbeitung in hervorragender Weise kombiniert. Ein Anwender kann beispielsweise mit Hilfe eines einzigen Meßgerätes nach der Erfindung die unterschiedlichsten elektrischen Meßgrößen durch entsprechende Programmierung des Meßgerätes erfassen.

Die richtige Auswahl der Anzeigeelemente für das erfindungsgemäße Meßgerät erfolgt nach Maßgabe der folgenden Ableseaufgabe:

- Ablesen von genauen Werten
- Schnelles Erkennen von Trends
- Erkennen von erreichten Grenzwerten.

Zur Erfüllung dieser Aufgaben stehen grundsätzlich

- eine digitale Ziffernanzeige
- eine analoge Skalenanzeige
- eine binäre Lampenanzeige oder
- eine alphanumerische Darstellung

zur Verfügung.

Wenn mit Hilfe einer einzigen Anzeigeart mehrere Ableseaufgaben gleichzeitig erfüllt werden sollen, etwa qualitatives und quantitatives Ablesen gleichzeitig, wie dies beispielsweise beim Ablesen von

- genauen Zahlenwerten und
- Trendwerten (ungefähren Werten)

der Fall ist, so ist für diese Aufgabe bei dem erfindungsgemäßen Meßgerät eine elektronisch beschriftbare Skala als programmierbare Skala vorzüglich geeignet, da hierbei Skalenblatt, Skalierung und Bezifferung jeweils in hervorragender Weise an die jeweils vorliegende Meßaufgabe angepaßt werden können.

Zur näheren Erläuterung der Erfindung, ihrer weiteren Merkmale und Vorteile dient die nachfolgende Beschreibung von bevorzugten Ausführungsbeispielen anhand der beigefügten Zeichnungen, in denen gleiche Bezugsziffern durchgehend gleiche Komponenten und Teile bezeichnen.

Dabei zeigt:

Fig. 1 ein Blockschaltbild eines Meßgerätes zur Messung der verschiedensten elektrischen Meßgrößen, einschließlich seiner Stromversorgung;

Fig. 2 eine Schaltung einer Meßwerk-Anpassungselektronik für analoge Meßwerte;

Fig. 3 eine weitere Ausführung einer Meßwerk-Anpassungselektronik für analoge Meßwerte;

Fig. 4 eine Schaltung einer Meßwerk-Anpassungselektronik für digitale Meßwerte;

Fig. 5 ein Blockschaltbild einer weiteren Ausführungsmöglichkeit eines Meßgerätes, und

Fig. 6 ein Ausführungsbeispiel einer als Fluoreszenzkollektor ausgebildeten, elektronischen Wechselskala, wie sie beispielsweise bei den Meßgeräten gemäß Fig. 1 oder 5 zum Einsatz gelangen kann.

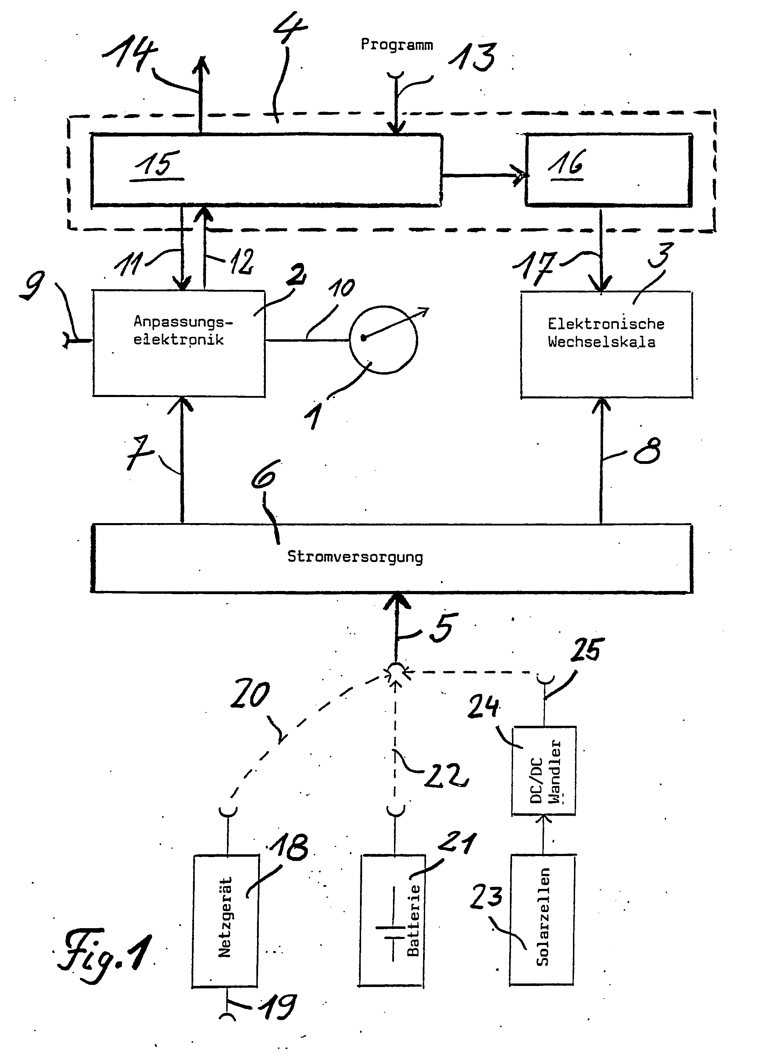

Gemäß Fig. 1 weist ein Meßgerät ein progammerierbares Einheitsmeßwerk 1 auf, das über eine Leitung 10 mit einer Anpassungselektronik 2 verbunden ist, die ihrerseits einen Eingang 9 für analoge oder digitale Meßgrößen ausweist. Weiterhin ist die Anpassungselektronik 2 über Leitungen 11 und 12 an einem EPROM 15 angeschlossen, welcher Bestandteil einer Programmiereinheit 4 mit Programmeingabe 13 ist. Mit Hilfe dieser Programmiereinheit 4 wird das Einheitsmeßwerk 1 über die der Programmiereinheit 4 nachgeschaltete Anpassungelektronik 2 in Abhängigkeit von der jeweils vorliegenden Meßaufgabe von dem Anwender des Meßgerätes programmiert, wobei zu diesem Zweck der EPROM 15 austauschbar ist. Anstelle des EPROM's 15 kann die Progammiereinheit 4 aber auch eine Anzahl von auswechselbaren Schaltbrücken oder einen frei programmierbaren Mikrocomputer enthalten. Weiterhin weist die Programmiereinheit 4 dem EPROM 15 nachgeschaltete Treiberschaltungen 16 auf, welche über eine Leitung 17 an eine programmierbare, elektronische Wechselskala 3 angeschlossen sind. Somit wird in einem Zuge mit der Programmierung des Einheitsmeßwerkes 1 die zugehörige Skala 3 programmiert, welche z. B. aus einem Flüssigkristall-Anzeigeelement (LCD) besteht.

Die Treiberschaltungen 16 für die Skala 3 können beispielsweise in Form eines Mikrocomputers in die Programmiereinheit 4 integriert sein.

Weiterhin können in die Programmiereinheit 4 Grenzwertschalter integriert sein, mittels derer im Fall des Erreichens von voreingestellten Grenzwerten über eine Leitung 14 entsprechende Grenzwertsignale auf optischem und/oder akustischem Wege ausgelöst werden.

Das Meßgerät weist weiterhin eine Stromversorgung 6 (einschließlich Buffer) auf, von welcher aus einerseits eine Leitung 7 zur Anspassungselektronik 2 und andererseits eine Leitung 8 zur programmierbaren, elektronischen Skala 3 führen.

Die Stromversorgung 6 weist ihrerseits einen Eingang 5 auf, mit dem beispielsweise ein Netzgerät 18 mit Anschluß 19 an das 220 V-Netz über eine Leitung 20 verbunden werden kann.

Wahlweise können aber auch eine Batterie 21 über eine Leitung 22 oder aber Solarzellen 23 über einen nachgeschalteten DC/DC-Wandler 24 sowie über eine Leitung 25 an den Eingang 5 der Stromversorgung 6 angeschlossen werden.

Wie aus der Fig. 2 ersichtlich ist, besteht die Anpassungelektronik 2 für Meßwerk 1 und Skala 3 im Falle der Erfassung von analogen Meßgrößen im wesentlichen aus einem beschaltbaren Operationsverstärker 26 mit vorgeschaltetem Eingangsnetzwerk 27 und parallelgeschaltetem Rückkopplungsnetzwerk 28,

5

wobei dieser Operationsverstärker 26 auch zur Bestimmung von Auflösung, Genauigkeit und Dynamik des gesamten Meßgerätes dient.

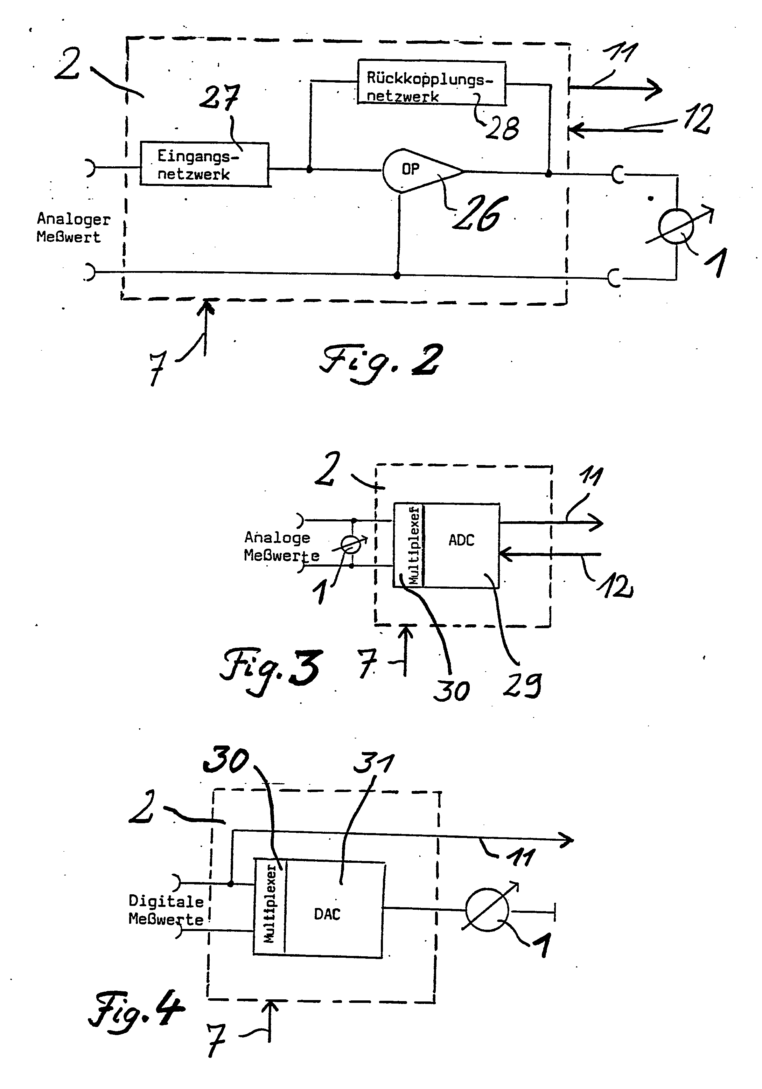

Wie Fig. 3 zeigt, kann die Anpassungselektronik 2 im Falle der Erfassung analoger Meßgrößen zusätzlich einen Analog-Digital-Wandler 29 aufweisen, sowie zum gleichzeitigen Erfassen und Anzeigen mehrerer Meßgrößen, wie z. B. Betrag/Phase oder Strom/Spannung zusätzlich einen Multiplexer 30, welcher eingangsseitig dem Analog-Digitalwandler 29 vorgeschaltet ist.

Aus der Fig. 4 ist eine Schaltungsanordnung für die Anpassungselektronik ersichtlich, wie sie im Falle der Erfassung von digitalen Meßgrößen zur Anwendung gelangt. Hierbei besteht die Anpassungselektronik 2 im wesentlichen aus einem Digital-Analog-Wandler 31, welchem eingangsseitig wiederum ein Multiplexer 30 vorgeschaltet ist.

Wie bereits weiter oben erwähnt, besteht die programmierbare, elektronisch beschriftbare Skala 3 vorzugsweise aus einem LCD, welches beispielsweise fest zugeordnete und beschriftete Skalen und Symbole aufweisen kann.

Es besteht aber auch die Möglichkeit, daß das LCD der Skala 3 aus einer frei programmierbaren Punktmatrix besteht, wie sie beispielsweise auf dem Gebiet des Schwarz-Weiß-oder Farbfernsehens bereits bekannt ist. Darüber hinaus kann das LCD der Skala 3 beleuchtbar sein und aus einer reflexiven, einer transmissiven oder einer transflexiven LCD bestehen.

Außerdem könne aber auch auf der LCD der Skala 3 neben Skalenteilen, Schriftzeichen, Sinnbildern und Symbolen, auch Balken, Zeigersymbole sowie alphanumerische Zeichen darstellbar sein, wobei etwa eine Balkenanzeige weiterhin eine quasidigitale Darstellung der Meßgrößen liefert.

Schließlich kann die elektronische Skala 3 aus einem farbigen LCD bestehen, dessen Farbe durch die jeweilige Amplitude der erfaßten und anzuzeigenden Meßgröße bestimmt wird.

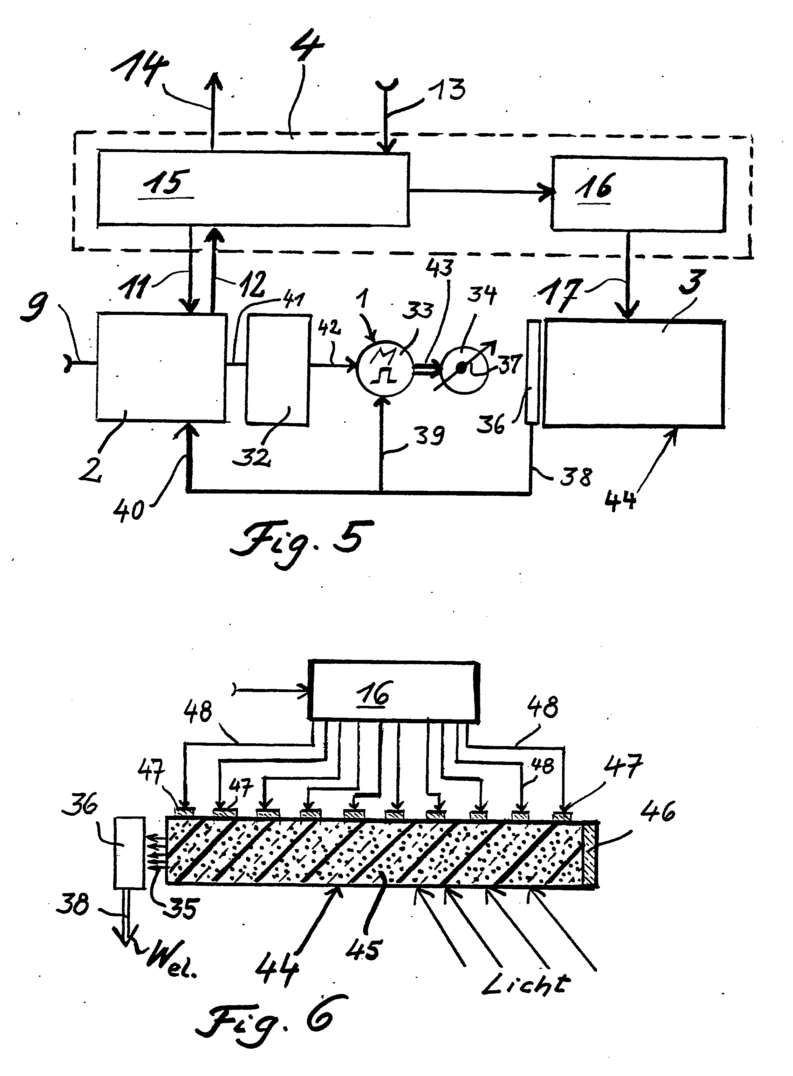

Bei einem weiteren Ausführungsbeispiel eines Meßgerätes, dessen Blockschaltbild aus der Fig. 5 zu ersehen ist, besteht das Einheitsmeßwerk 1 aus einem rotatorischen Schrittmotor 33, der von einer vorgeschalteten Ansteuerelektronik 32 in Form einer digitalen Treiberstufe über eine Leitung 42 mit entsprechenden Impulsfolgen angesteuert wird. Der Schrittmotor 33 weist eine Ausgangswelle 43 zur Abgabe der mechanischen Energie $W_{mech}$ auf und arbeitet auf einem Getriebe 34, wobei gleichzeitig Drehrichtung, Drehzahl und Drehwinkel $\phi$ festgelegt sind. Entsprechend den jeweiligen Schrittwinkeln des Schrittmotors 33 wird somit mittels des Getriebes 34 ein Zeiger 37 betätigt bzw. bewegt.

Bei dem Schrittmotor 33 handelt es sich um einen vor-und rückwärts laufenden Motor, beispielsweise um einen Reluktanz-Schrittmotor oder um einen polarisierten Schrittmotor.

Wie weiterhin aus Figur 5 ersichtlich, ist die Ansteuerelektronik 32 über eine Leitung 41 mit der vorgeschalteten Anpassungselektronik 2 verbunden, die ihrerseits einen Eingang 9 für analoge oder digitale Meßgrößen aufweist. Weiterhin ist die Anpassungselektronik 2 über die Leitungen 11 und 12 an einen EPROM 15 angeschlossen, der Bestandteil einer Programmiereinheit 4 mit einer Programmeingabe 13 ist, wie dies bereits anhand des Ausführungsbeispiels nach Figur 1 erläutert wurde. Auch bei der Ausführung des Meßgerätes nach Figur 5 weist die Programmiereinheit 4 Treiberschaltungen 16 auf, an die über eine Leitung 17 eine programmierbare Skala 3 angeschlossen ist. Somit werden wiederum in Abhängigkeit von der je nach vorliegender Meßaufgabe variablen Programmeingabe 13 sowohl das Einheitsmeßwerk 1 als auch die Skala 3 entsprechend programmiert. Bei der Ausführung nach Figur 5 besteht die Skala 3 aus einem Fluoreszenzkollektor 44, welcher, wie im einzelnen anhand der Figur 6 erläutert wird, im wesentlichen aus einer planparallelen Kunststoffplatte von z. B. 3 mm Dicke als Lichtsammler bzw. Lichtkonzentrator besteht, wobei in diese Kunststoffplatte ein fluoreszierender Farbstoff 45 eingearbeitet ist. Die durch diesen Farbstoff erzeugte Fluoreszenzstrahlung wird durch Totalreflexion innerhalb der Kunststoffplatte an deren Kanten geleitet und dort als konzentrierte Fluoreszenzstrahlung 35 abgestrahlt. Weiterhin ist auf eine der Oberflächen des Fluoreszenzkollektors 44 ein LCD-Display 47 in Form von Flüssigkristallzellen aufgebracht, beispielsweise aufgedampft, durch welches auf dieser Oberfläche veränderbare Stör stellen künstlich erzeugt werden, wobei diese Flüssigkristallzellen bzw. das LCD-Display jeweils über Leitungen 48 von den Treiberschaltungen 16 angesteuert werden. Das in den Fluoreszenzkollektor 44 einfallende Licht, z. B. das Tageslicht, regt den Farbstoff 45 zur Fluoreszenz an und diese Fluoreszenzstrahlung tritt sodann an den jeweiligen durch das selektiv ansteuerbare LCD-Display 47 erzeugten Störstellen an der entsprechenden Plattenoberfläche wieder aus, derart, daß die entsprechenden Skalenelemente oder Symbole des LCD durch diesen Lichtaustritt optisch sehr gut wahrnehmbar sind.

Außerdem läßt sich das innerhalb der Kunststoffplatte des Fluoreszenzkollektors in Folge der hier stattfindenden zick-zack-förmigen Totalreflexion zu den jeweiligen seitlichen Plattenkanten geleitete Fluoreszenzlicht zur Erzeugung von elektrischer Energie für die Versorgung des Meßgerätes ausnutzen. Zu diesem Zweck sind gemäß dem Ausführungsbeispiel nach Figur 6 an mindestens einer der seitlichen Außenkanten des Fluoreszenzkollektors 44 Solarzellen 36 angeordnet, während auf den gegenüberliegenden seitlichen

6

0 288 671

Außenkanten Spiegel 46 angebracht sind. Die von diesen Solarzellen 36 erzeugte elektrische Energie $W_{el}$ wird über die Leitung 38 abgegeben und dient zur Stromversorgung sowohl des Schrittmotores 33 als auch der anderen Komponenten des Meßgerätes, wie dies in der Figur 5 im Detail dargestellt ist. Die von der Solarzellenanordnung 36 abgehende Leitung 38 verzweigt sich in eine erste Zweigleitung 39, die zu dem Schrittmotor 33 führt, sowie in eine zweite Zweigleitung 40, die zu einem Eingang in die Anpassungelektronik 2 geht.

Die Treiberschaltungen 16 zur Ansteuerung des LCD-Displays 47 können beispielsweise in der Form eines Mikroprozessors ausgebildet und innerhalb der Programmiereinheit 4 integriert sein.

Bezugszeichenliste
1 Einheitsmeßwerk
2 Anpassungselektronik
3 Skala
4 Programmiereinheit
5 Eingang
6 Stromversorgung
7 Leitung
8 Leitung
9 Eingang
10 Leitung
11 Leitung
12 Leitung
13 Programmeingabe
14 Leitung
15 EPROM
16 Treiberschaltungen
17 Leitung
18 Netzgerät
19 Anschluß
20 Leitung
21 Batterie
22 Leitung
23 Solarzellen
24 DC/DC-Wandler
25 Leitung
26 Operationsverstärker
27 Eingangsnetzwerk
28 Rückkopplungsnetzwerk
29 Analog-Digital-Wandler
30 Multiplexer
31 Digital-Analog-Wandler
32 Ansteuerelektronik (digitale Treiberstufe)
33 Schrittmotor
34 Getriebe
35 Konzentrierte Fluoreszenzstrahlung
36 Solarzelle
37 Zeiger
38 Leitung
39 Zweigleitung
40 Zweigleitung
41 Leitung
42 Leitung
43 Ausgangswelle zur Abgabe von $W_{mech}$
44 Fluoreszenzkollektor
45 Fluoreszierender Farbstoff

46 Spiegel
47 LCD-Display
48 Leitung

## Ansprüche

1. Meßgerät zum Erfassen, Verarbeiten und Anzeigen einer aus einer Anzahl verschiedener physikalischer, insbesondere elektrischer Meßgrößen beliebig wählbaren Meßgröße, die in analoger oder digitaler Form vorliegt,

dadurch gekennzeichnet,

daß das Meßgerät eine programmierbare Anpassungselektronik (2) mit einem Einheitsmeßwerk (1) und/oder eine programmierbare Skala (3) sowie eine Programmiereinheit (4) aufweist, an die einerseits über die nachgeschaltete Anpassungselektronik (2) das Einheitsmeßwerk (1) und/oder andererseits die Skala (3) angeschlossen sind, wobei zum Betrieb der Komponenten des Meßgerätes eine elektrische Stromversorgung (6) vorzugsweise aus der Meßgröße selbst oder aus Solarzellen vorgesehen ist.

2. Meßgerät nach Anspruch 1,

dadurch gekennzeichnet,

daß die Programmiereinheit (4) eine Anzahl von auswechselbaren Schaltbrücken und/oder ein auswechselbares EPROM (15) und/oder einen frei programmierbaren Mikrocomputer aufweist.

3. Meßgerät nach einem der Ansprüche 1 oder 2,

dadurch gekennzeichnet,

daß die Programmiereinheit (4) Treiberschaltungen (16) für eine vorzugsweise elektronisch beschriftbare Skala (3) aufweist.

4. Meßgerät nach Anspruch 3,

dadurch gekennzeichnet,

daß die Treiberschaltungen (16) in der Form eines Mikrocomputers in die Programmiereinheit (4) integriert sind.

5. Meßgerät nach einem der vorhergehenden Ansprüche,

dadurch gekennzeichnet,

daß in die Programmiereinheit (4) weiterhin Grenzwertschalter für optisch und/oder akustisch signalisierbare Grenzwerte integriert sind.

6. Meßgerät nach einem der vorhergehenden Ansprüche,

dadurch gekennzeichnet,

daß die Anpassungselektronik (2) für die Messung analoger Meßgrößen einen beschaltbaren Operationsverstärker (26), der auch die Auflösung, Genauigkeit und die Dynamik des Meßgerätes bestimmt, sowie ggf. zusätzlich einen Analog-Digital-Wandler (29) aufweist.

7. Meßgerät nach einem der Ansprüche 1 - 5,

dadurch gekennzeichnet,

daß die Anpassungselektronik (2) für die Messung digitaler Meßgrößen im wesentlichen aus einem Digital-Analog-Wandler (31) besteht.

8. Meßgerät nach Anspruch 6 oder 7,

dadurch gekennzeichnet,

daß die Anpassungselektronik (2) zusätzlich einen Multiplexer (30) zum gleichzeitigen Erfassen und Anzeigen mehrerer Meßgrößen (z. B. Betrag/Phase; Strom/Spannung) enthält.
   9. Meßgerät nach einem der vorhergehenden Ansprüche,

dadurch gekennzeichnet,

daß die programmierbare Skala (3) wenigstens ein Flüssigkristall-Anzeigeelement (LCD) aufweist.
   10. Meßgerät nach Anspruch 9,

dadurch gekennzeichnet,

daß die Skala (3) aus einem farbigen LCD besteht, wobei die Farbe durch die Amplitude der erfaßten Meßgröße bestimmt ist.
   11. Meßgerät nach einem der vorhergehenden Ansprüche,

dadurch gekennzeichnet,

daß als Skala (3) ein Fluoreszenzkollektor (44) vorgesehen ist, bei dem in einer Kunststoffplatte als Lichtsammler bzw. Lichtkonzentrator ein fluoreszierender Farbstoff eingearbeitet ist, der das absorbierte Licht durch Fluoreszenz in konzentrierter Form wieder über durch ein LCD-Display auf der Oberfläche der Kunststoffplatte künstlich erzeugte, veränderbare Störstellen abgibt.
   12. Meßgerät nach Anspruch 11,

dadurch gekennzeichnet,

daß an wenigstens einer der Kanten des Fluoreszenzkollektors (44) Solarzellen (36) zur Gewinnung von elektrischer Energie angebracht sind.
   13. Meßgerät nach einem der vorhergehenden Ansprüche,

dadurch gekennzeichnet,

daß im Bereich der Skala (3) zusätzlich "TALK BACK IC's" (digitalisierte und wiederholte Sprache) vorgesehen sind.
   14. Meßgerät nach einem der vorhergehenden Ansprüche,

dadurch gekennzeichnet,

daß das Einheitsmeßwerk (1) ein Meßwerk mit konstantem Innenwiderstand und konstanter Dämpfung ist und vorzugsweise aus einem Drehspulmeßwerk oder aus einem Dreheisenmeßwerk besteht.
   15. Meßgerät nach einem Ansprüche 1 - 13,

dadurch gekennzeichnet,

daß das Einheitsmeßwerk (1) aus einem digital ansteuerbaren Schrittmotor (33) besteht, welcher entweder ein rotatorischer Schrittmotor oder ein Linearschrittmotor ist.
   16. Meßgerät nach Anspruch 15,

dadurch gekennzeichnet,

daß der Schrittmotor ein in zwei Drehrichtungen, das heißt vor-und rückwärts laufender Schrittmotor (33) ist.
   17. Meßgerät nach Anspruch 15 oder 16,

dadurch gekennzeichnet,

9

daß als Ansteuerelektronik für den Schrittmotor (33) eine digitale Treiberstufe (32) vorgesehen ist, die der der Anpassungselektronik (2) nachgeschaltet ist.

18. Meßgerät nach einem der Ansprüche 15 - 17,

dadurch gekennzeichnet,

daß die Energieversorgung des Schrittmotors (33) und/oder der weiteren Komponenten des Gerätes durch die an einer oder mehreren Kanten des Fluoreszenzkollektors (44) angebrachten Solarzellen (36) erfolgt, wobei gegenüberliegende, freie Kanten des Fluoreszenzkollektors (44) zur Totalreflexion hochreflektiv ausgebildet, insbesondere versilbert sind.

19. Meßgerät nach einem der Ansprüche 11 - 18,

dadurch gekennzeichnet,

daß die Treiberschaltungen (16) in der Form eines Mikroprozessors in die Programmiereinheit (4) integriert sind, wobei dieser Mikroprozessor zur Ansteuerung des LCD-Displays (47) auf der Oberfläche der Kunststoffplatte des Fluoreszenzkollektors (44) dient.

20. Meßgerät nach einem der vorhergehenden Ansprüche,

dadurch gekennzeichnet,

daß die gesamte Elektronik des Meßgerätes mit einem ASIC (Application Specific Integrated Circuit) realisiert ist.

14

4

Programm

13

15

16

11

12

9

2

10

Anpassungselektronik

3

17

Elektronische
Wechselskala

1

7

6

8

Stromversorgung

5

20

25

24

22

18

21

23

Netzgerät

Batterie

DC/DC
Wandler

Solarzellen

19

**Fig.1**

0 288 671

Fig. 2

Fig. 3

Fig. 4

**Fig. 5**

**Fig. 6**